# EUROPÄISCHE PATENTSCHRIFT

(11) **EP 1 707 448 B1**
(45) Veröffentlichungstag und Bekanntmachung des Hinweises auf die Patenterteilung: **30.01.2008**
(21) Anmeldenummer: 06116909.0
(22) Anmeldetag: 18.10.2003
(51) Int. Cl.: B60R 21/01, G01L 19/00

(54) **Drucksensoranordnung zur Aufpralldetektion**
Collision detection pressure sensor assembly
Ensemble de détection de pression servant à détecter une collision

(30) Priorität: 06.03.2003 DE 10309713
(43) Veröffentlichungstag der Anmeldung: 04.10.2006
(62) Teilanmeldung aus: 03815026.4
(73) Patentinhaber: ROBERT BOSCH GMBH, 70442 Stuttgart (DE)
(72) Erfinder: Recknagel, Rolf-Jürgen, 07747 Jena (DE); Bunse, Michael, 71665 Vaihingen/Enz (DE); Wellhoefer, Matthias, 70499 Stuttgart (DE)

(56) Entgegenhaltungen:
- EP-A- 0 937 612
- EP-A- 0 978 425
- DE-A1- 10 114 465
- US-A- 5 419 407
- LORENZ PFAU ET AL: "Sensorsystem zur Seitenaufprallerkennung bei einem Kraftfahrzeug" SIEMENS TECHNIK REPORT, Bd. 2, Nr. 3, April 1999 (1999-04), Seite 44, XP007001798

## Beschreibung

### Stand der Technik

Die Erfindung geht aus von einer Drucksensoranordnung zur Aufpralldetektion nach der Gattung der unabhängigen Patentansprüche.

Aus EP 0937612 A2 ist eine Anordnung mit wenigstens zwei Drucksensoren in einem Hohlraum eines Fahrzeugs bekannt. Jeder Drucksensor weist einen eigenen Druckeinlasskanal auf. Aus Lorenz, V. et al., Sensorsystem zur Seitenaufprallerkennung bei einem Kraftfahrzeug, Siemens Technik Report, Band 2, Nr. 3, April 1999, Seite 44, XP 007001798 ist eine Anordnung von zwei Drucksensoren in einem Gehäuse bekannt.

Aus DE 100 57 258 C1 ist es bekannt, dass Druck- oder Temperatursensoren zur Seitenaufpralldetektion verwendet werden können. Dafür werden Membransensoren verwendet, die aufgrund ihrer Membranstruktur auch für Beschleunigungen empfmdlich sind.

Nachteilig daran ist, dass das Drucksignal durch die Beschleunigung verfälscht wird. Insbesondere an der Grenze zwischen Auslöse- und Nichtauslöse-Crashes kann es dadurch unter Umständen zu einer falschen Auslöseentscheidung kommen.

### Vorteile der Erfindung

Es ist vorteilhaft, dass eine Drucksensoranordnung vorliegt, die einzelne oder Gruppen von Drucksensorelementen, also mindestens zwei Drucksensoren aufweist, die jeweils einen eigenen Druckeinlasskanal aufweisen. Damit ist eine Plausibilisierung durch das Drucksensorprinzip selbst möglich, und der Performanceverlust durch langsamere Plausibilitätssensoren wird vermieden. Die adiabatische Druckänderung bei einem Aufprall ist erheblich schneller zu detektieren als ein Beschleunigungssignal. Dies erhöht die Sicherheit der Fahrzeuginsassen, da eine Auslöseentscheidung für Rückhaltemittel erheblich früher getätigt werden kann, als es bei einer Plausiblisierung mittels eines Beschleunigungssensors möglich wäre. Diese Drucksensoranordnung ist insbesondere unanfälliger gegenüber äußeren Einflüssen wie Schmutz oder Verstopfungen eines Druckeinlasskanals.

Weiterhin ist es vorteilhaft, dass die beiden Drucksensoren mit dem jeweils eigenen Druckeinlasskanal in einem gemeinsamen Gehäuse angeordnet sind. Damit ist der Einbau der Drucksensoranordnung sehr einfach.

Durch die in den abhängigen Ansprüchen aufgeführten Maßnahmen und Weiterbildungen sind vorteilhafte Verbesserungen der im unabhängigen Patentanspruch angegebenen Drucksensoranordnung möglich.

Die Druckeinlasskanäle können dabei die gleiche Geometrie aufweise, so dass jeder Drucksensor als Sensor zur Aufprallerkennung oder als Plausibilitätssensor verwendet werden kann. Alternativ ist es möglich, dass ein Druckeinlasskanal derart gestaltet wird, dass der Druckeinlasskanal besonders guten Schutz gegen Schmutz bietet. Dies kann beispielsweise durch Verringerung des Volumens erreicht werden. Das Volumen kann durch einen kleineren Durchmesser und/oder eine geringere Länge des Druckeinlasskanals erreicht werden. Damit wird zwar die Ansprechzeit auf die adiabatische Druckänderung verlängert. Dafür ist dieser Drucksensor sicherer und somit als Plausibilitätssensor geeignet, während der andere Drucksensor besonders als Sensor zur Aufprallerkennung geeignet ist.

Die Drucksensoren können gleiche oder unterschiedliche Drucksensorelemente aufweisen. Werden gleiche Drucksensorelemente verwendet und sind die übrigen Geometrien des Sensors auch gleich, dann sind die Drucksensoren austauschbar für Aufprallerkennung und Plausibilität einsetzbar. Sind die Drucksensorelemente unterschiedlich, sprechen sie also verschieden schnell auf eine adiabatische Druckänderung in einem Hohlraum des Fahrzeugs an, dann kann der schnellere zur Aufprallerkennung und der langsamere zur Plausibilität verwendet werden.

### Zeichnungen

Ausführungsbeispiele der Erfindung sind in der Zeichnung dargestellt und werden in der nachfolgenden Beschreibung näher erläutert.

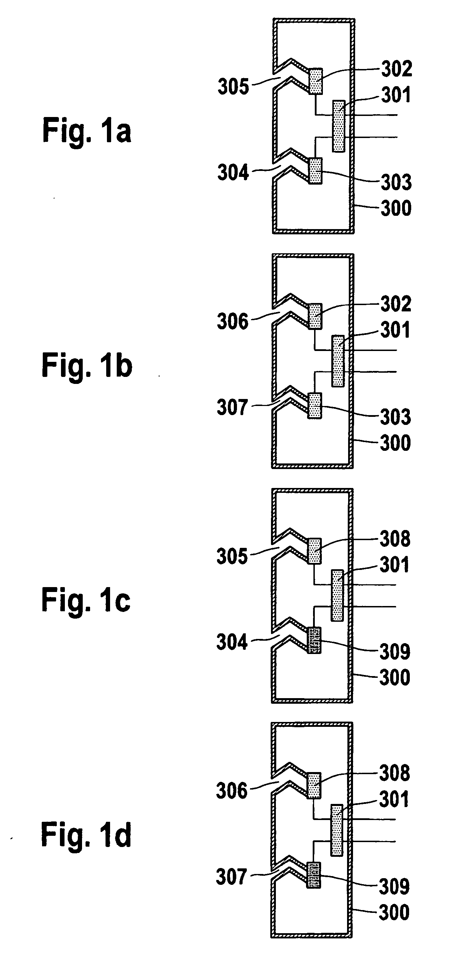

Es zeigen Figur 1a-1d Konfigurationen einer Drucksensoranordnung mit zwei Drucksensoren.

### Beschreibung

Drucksensoren zur Erkennung eines Seitenaufpralls werden bereits seit einigen Jahren eingesetzt. Die Drucksensorelemente stellen dabei meist eine Membran da, mit der kapazitiv, induktiv oder piezo-resistiv der Druck in einem Volumen gemessen wird. Zum Schutz gegen Korrosion, Verschmutzung und Eindringen von Wasser oder ähnlichem wird diese Membran selbst oftmals geschützt, beispielsweise durch eine spezielle Schutzschicht oder eine Vollvergelung. Die Drucksensoren werden in einem Hohlraum, beispielsweise einem Seitenteil eines Fahrzeugs eingebaut, wobei der Hohlraum weitgehend geschlossen ist, so dass sich bei einer plötzlichen Volumenänderung infolge eines Aufpralls eine adiabatische Druckerhöhung ergibt.

Da die Sensormembran eine Masse besitzt, reagiert diese selbst schon auf Beschleunigungen. Je größer diese Masse ist, umso empfindlicher ist der Drucksensor. Eine eventuell vorhandene Schutzschicht oder Vergelung hat zur Folge, dass der Drucksensor noch sensibler auf Beschleunigungssignale reagiert. Dadurch werden bei einem Crash- oder einem Missuse-Fall die Drucksignale je nach Masse durch die Beschleunigung verfälscht. An der Grenze zwischen Auslöse- und Nichtauslöse-Crash kann es dadurch unter Umständen zu einer falschen Auslöseentscheidung kommen.

Wird eine Tür durch einen Crash eingedrückt, kommt es, sofern die Tür weitgehend geschlossen ist, zu einer adiabatischen Zustandsänderung der Luft, die mit dem Drucksensor erkannt wird und eine besonders schnelle Methode der Seitenaufprallerkennung darstellt. Das bedeutet, dass ein eindeutiger Zusammenhang zwischen gemessener Druckänderung und Volumenänderung besteht. Die Selektion dieser Druckänderung erfolgt, wie gesagt, sehr schnell, innerhalb weniger Millisekunden in der Regel.

Die neuartige Drucksensoranordnung besitzt wenigstens zwei Sensormembranen, die die Druckänderung im Innenraum einer Tür detektieren. Dabei befinden sich vorzugsweise beide Sensorelemente in einem Gehäuse mit einem gemeinsamen Druckeinlasskanal. Das gemeinsame Gehäuse ist derart auszulegen, dass beide Drucksensorelemente einen ausreichenden Abstand zueinander haben. Beide Drucksensorelemente sind auf verschiedenen Seiten, bezogen auf den Druckeinlasskanal, anzubringen, der eine spezielle Form besitzt, um Verschmutzungen bzw. Eindringen von Wasser zu vermeiden. Die Sensorelemente können gegen äußere Einflüsse, beispielsweise durch eine Vergelung oder eine spezielle Beschichtung, geschützt sein. Dadurch erhöht sich die beschleunigungsempfindliche Masse. Durch diese beschriebene Drucksensoranordnung kann man den ursprünglichen Nachteil einer Beschleunigungsempfindlichkeit der Druckmessung zu einem Vorteil ausnutzen: Bei einer Beschleunigung, die senkrecht zu den Membranflächen wirkt, erfolgt bei beiden Sensorelementen eine Auslenkung in die gleiche Richtung. Durch die speziell gewählte Anordnung der Membranen - die Sensorelemente sind gegenläufig eingebaut - entstehen im Falle einer Druckänderung bei beiden Sensorelementen Signale mit gleichen Vorzeichen, während eine Beschleunigung Signale verschiedener Vorzeichen hervorruft. Daher lässt sich das Beschleunigungssignal vom Drucksignal eindeutig von der nachfolgenden Elektronik trennen. Die Summe der beiden Membransignale liefert das doppelte Drucksignal, während die Differenz das doppelte Beschleunigungssignal ergibt. Das gewonnene Beschleunigungssignal liegt zunächst als ein Drucksignal vor, kann aber direkt und eindeutig in eine echte Beschleunigung umgerechnet werden. Dies kann dadurch vorgenommen werden, dass eine Differenz gebildet wird, durch zwei dividiert wird und entsprechend skaliert wird, beispielsweise nach einem Kalibriervorgang.

Das so gewonnene Beschleunigungssignal kann beispielsweise als zweites und druckunabhängiges Sensorsignal interpretiert werden. Damit kann ein solcher Drucksensor auch die Crash-Diskriminierung aufgrund der Beschleunigungsinformation durchführen, also auch bei einem Crash, wenn die Autotür, in die der Sensor montiert ist, nicht getroffen wird. Das Beschleunigungssignal kann jedenfalls auch dazu verwendet werden, die Plausibilität für das Drucksignal zu liefern.

Um die Beschleunigungsempfmdlichkeit optimal auszunutzen, sollte der Sensor derart montiert werden, dass die Membranfläche senkrecht auf der wirkenden Beschleunigung steht. Bei einem Schutz, beispielsweise durch Vollvergelung, ist darauf zu achten, dass die Gelmenge so optimiert wird, dass das System nicht zu träge wird, also noch eine schnelle Sensorreaktion möglich ist, wobei die Gelmenge nicht beliebig verringert werden sollte, um noch ausreichend Schutz zu bieten. Folglich kann der Vorteil des Schutzes einer Vollvergelung ausgeschöpft werden und gleichzeitig die Beschleunigungsempfindlichkeit von der Druckempfindlichkeit in zwei separate Signale getrennt werden.

Für solche Drucksensoren werden üblicherweise Beschleunigungssensoren als Plausibilitätssensoren verwendet. Diese ziehen jedoch die Performance der Drucksensoren nach unten. Daher wird vorgeschlagen, mehr als einen Drucksensor in einem Hohlraum des Fahrzeugs zu verbauen, um den zweiten Drucksensor selbst als Plausibilitätssensor zu verwenden. Dafür weist jeder Drucksensor einen eigenen Druckeinlasskanal auf. Vorzugsweise werden die beiden Drucksensoren in einem gemeinsamen Gehäuse eingebaut. Die Drucksensoren können die oben dargestellten Drucksensorelemente aufweisen, um auch Beschleunigungen effektiv auszuwerten. Auch bezüglich der Anordnung der Auswertebausteine gilt hier das gleich wie bereits oben gesagt.

Fig. 1a - d zeigen verschiedene Konfigurationen von zwei Drucksensoren. Es werden die Möglichkeiten gezeigt, die sich durch die Variation des Druckeinlasskanals und der Drucksensorelemente ergeben. Fig. 1a zeigt ein gemeinsames Gehäuse 300 mit zwei gleichen Drucksensoren 302 und 303, die an einen Senderbaustein 301 angeschlossen sind, der die Aufbereitung und Übertragung der Sensorwerte zu einem Auswertebaustein, bespielsweise dem Airbagsteuergerät übernimmt. Die beiden Drucksensoren 302 und 303 weisen jeweils einen gleich geformten Druckeinlasskanal 304, 305 auf, so dass beide Drucksensoren Aufprallerkennung und Plausibilisierung übernehmen können.

Fig. 1b zeigt wiederum das gemeinsame Gehäuse 300 mit den zwei gleichen Drucksensoren 302 und 303, die an den Senderbaustein 301 angeschlossen sind. Nunmehr weist der Drucksensor 302 einen breiteren Druckeinlasskanal 306 als Druckeinlasskanal 307, der dem Drucksensor 303 zugeordnet ist. Der breitere Druckeinlasskanal 306 gewährt eine schnellere Ansprechzeit auf Druckänderungen als der der Druckeinlasskanal 307. Dafür ist der schmalere Druckeinlasskanal 307 ein besserer Schutz gegen Schmutz. Folglich wird der Drucksensor 302 zur Aufprallerkennung und der Drucksensor 303 zur Plausibilisierung verwendet. Sollte der breitere Druckeinlasskanal 306 verstopft sein und kein Signal liefern, während der Drucksensor 303 einen Druckanstieg anzeigt, kann auch der Drucksensor 303 zur Aufprallerkennung verwendet werden, wobei dann zusätzlich noch ein Beschleunigungssensor oder wie oben dargestellt eine Anordnung des Drucksensors zur Beschleunigungsmessung als Plausibilitätssensor verwendet werden.

Fig. 1c zeigt wiederum das gemeinsame Gehäuse 300 mit zwei gleichen Druckeinlasskanälen 304 und 305 aber unterschiedlichen Drucksensoren 308 und 309, die an den Senderbaustein 301 angeschlossen sind. Der Drucksensor 308 ist von höherer Güte in Bezug auf Ansprechzeiten und wird daher als Sensor zur Aufprallerkennung verwendet. Der Drucksensor 309 weist eine geringere Güte auf und wird daher zur Plausibilisierung verwendet. Hilfsweise kann bei einem Ausfall des Sensors 308 auch der Drucksensor 309 als Aufprallsensor verwendet werden, wobei dann eine schlechtere Performance bei der Erkennung des Aufpralls in Kauf genommen wird.

Fig. 1d zeigt letztlich das gemeinsame Gehäuse 300 mit den unterschiedlich guten Drucksensoren 308 und 309, wobei dem besseren Drucksensor 308 der breitere Druckeinlasskanal 306 und dem schlechteren Drucksensor 309 der schmalere Druckeinlasskanal 307 zugeordnet sind.

Die Signalverarbeitung erfolgt hier in einem externen Gerät, vorzugsweise dem Airbagsteuergerät, das entweder zentral oder in der Seite angeordnet ist. Dafür versendet der Senderbaustein 301 die Signale beider Drucksensoren 302 und 303 bzw. 308 und 309 in einem Multiplexverfahren zu dem Steuergerät. Hier ist eine unidirektionale Datenübertragung vorgesehen. Es ist alternativ jedoch auch eine bidirektionale oder auch eine Busverbindung möglich. Die Drucksensoren oder der Senderbaustein 301 weisen Mittel zur Signalaufbereitung auf. Diese enthalten Meßverstärker, Filter, Analog-DigitalWandler und Auswertebausteine. Den Drucksensoren kann eine Selbsttestfunktion zugeordnet sein, um deren Funktionsfähigkeit zu verifizieren. In Abhängigkeit davon wird entschieden, welcher Drucksensor zur Aufprallerkennung und zur Plausibilisierung verwendet wird.

Die Plausibilität kann vom Senderbaustein 301 als Flag übertragen werden, um Übertragungskapazität einzusparen.

## Patentansprüche

1. Drucksensoranordnung zur Aufpralldetektion, die einen Aufprall mittels einer adiabatischen Druckänderung detektiert, wobei die Drucksensoranordnung wenigstens zwei Drucksensoren (302, 303) in einem Hohlraum eines Fahrzeugs aufweist und jeder Drucksensor (302, 303) einen eigenen Druckeinlasskanal (304; 305) aufweist **dadurch gekennzeichnet, dass** die wenigstens zwei Drucksensoren (302, 303) in einem gemeinsamen Gehäuse (300) angeordnet sind.

2. Drucksensoranordnung nach Anspruch 1, **dadurch gekennzeichnet, dass** die Druckeinlasskanäle (304, 305) dieselbe Geometrie aufweisen.

3. Drucksensoranordnung nach Anspruch 1, **dadurch gekennzeichnet, dass** ein erster Druckeinlasskanal derart geformt ist, dass der erste Druckeinlasskanal (307) einen Schutz gegen Schmutz bietet, und dass der zweite Druckeinlasskanal derart geformt ist, dass der zweite Druckeinlasskanal (306) eine schnelle Ansprechzeit auf eine Druckänderung gewährleistet.

4. Drucksensoranordnung nach Anspruch 3, **dadurch gekennzeichnet, dass** der erste Druckeinlasskanal (307) ein geringeres Volumen aufweist als der zweite Druckeinlasskanal (306).

5. Drucksensoranordnung nach einem der Ansprüche 1-4, **dadurch gekennzeichnet, dass** die Drucksensoren (302, 303) gleiche Drucksensorelemente aufweisen.

6. Drucksensoranordnung nach einem der Ansprüche 1-4, **dadurch gekennzeichnet, dass** ein erster Drucksensor (302) wenigstens ein schnelleres Drucksensorelement aufweist als ein zweiter Drucksensor (303).

## Claims

1. Pressure sensor arrangement for detecting impacts, which detects an impact by means of an adiabatic change in pressure, wherein the pressure sensor arrangement has at least two pressure sensors (302, 303) in a cavity in a vehicle, and each pressure sensor (302; 303) has its own pressure inlet duct (304; 305), **characterized in that** the at least two pressure sensors (302, 303) are arranged in a common housing (300).

2. Pressure sensor arrangement according to Claim 1, **characterized in that** the pressure inlet ducts (304, 305) have the same geometry.

3. Pressure sensor arrangement according to Claim 1, **characterized in that** a first pressure inlet duct is shaped in such a way that the first pressure inlet duct (307) provides protection against dirt, and **in that** the second pressure inlet duct is shaped in such a way that the second pressure inlet duct (306) ensures a rapid response time to a change in pressure.

4. Pressure sensor arrangement according to Claim 3, **characterized in that** the first pressure inlet duct (307) has a smaller volume than the second pressure inlet duct (306).

5. Pressure sensor arrangement according to one of Claims 1-4, **characterized in that** the pressure sensors (302, 303) have identical pressure sensor elements.

6. Pressure sensor arrangement according to one of Claims 1-4, **characterized in that** a first pressure sensor (302) has at least a faster pressure sensor element than a second pressure sensor (303).

## Revendications

1. Dispositif détecteur de pression pour la détection d'une collision par détection de la variation adiabatique de la pression en cas de collision, le dispositif détecteur de pression comportant au moins deux capteurs de pression (302, 303) logés dans une cavité du véhicule et chaque capteur de pression (302, 303) a son propre canal d'entrée de pression (304, 305),
**caractérisé en ce qu'**
au moins les deux capteurs de pression (302, 303) sont logés dans un boîtier commun (300).

2. Dispositif de capteurs de pression selon la revendication 1,
**caractérisé en ce que**
les canaux d'entrée de pression (304, 305) ont la même géométrie.

3. Dispositif de capteurs de pression selon la revendication 1,
**caractérisé en ce que**
le premier canal d'entrée de pression est formé (307) pour être protégé contre la saleté et
le second canal d'entrée de pression (306) est formé pour assurer un temps de réponse rapide à une variation de pression.

4. Dispositif de capteurs de pression selon la revendication 3,
**caractérisé en ce que**
le premier canal d'entrée de pression (307) a un volume plus faible que le second canal d'entrée de pression (306).

5. Dispositif de capteurs de pression selon l'une des revendications 1 à 4,
**caractérisé en ce que**
les capteurs de pression (302, 303) sont équipés des mêmes éléments capteurs de pression.

6. Dispositif de capteurs de pression selon l'une des revendications 1 à 4,
**caractérisé en ce que**
le premier capteur de pression (302) a un élément capteur de pression plus rapide que le second capteur de pression (303).
